# EUROPEAN PATENT SPECIFICATION

(11) **EP 1 125 872 B1**
(45) Date of publication and mention of the grant of the patent: **15.10.2003**
(21) Application number: 01101998.1
(22) Date of filing: 30.01.2001
(51) Int. Cl.: B65G 47/71, B65G 17/26

(54) **Switching system for a conveyor-distributor with take-up heads**
Weichenanordnung für einen Verteilförderer mit Greifvorrichtungen
Dispositif d' aiguillage pour convoyeur de distribution avec têtes de préhension

(30) Priority: 14.02.2000 IT BO000060
(43) Date of publication of application: 22.08.2001
(73) Proprietor: Cosmopack S.r.l., 41100 Modena (IT)
(72) Inventor: Vecchi, Celeste, 41100 Modena (IT); Campagnoli, Roberto, 40134 Bologna (IT); Lacinio, Salvatore, 40050 Monte Sanpietro, Bologna (IT)
(74) Representative: Gustorf, Gerhard, Dipl.-Ing.

(56) References cited:
- EP-A- 0 403 079
- EP-A- 0 882 662
- CH-A- 542 769
- GB-A- 583 151
- US-A- 4 632 238
- US-A- 5 944 165

## Description

The present invention relates to a switching system for a conveyor-distributor with take-up heads as set forth in the preamble of claim 1. Such as system is disclosed in US-A 4 632 238.

A further conveyor-distributor with take-up heads is known from US-A 4 287 980.

-According to the said patent, a particular switching system is provided, which, briefly, comprises a plate disposed in the vicinity of the lower branch of the conveyor-distributor, wherein the said plate, from upstream towards downstream, has a first roller-guide track, which forks into two secondary roller-guide tracks, and wherein, again in the downstream direction, each of the said secondary roller-guide tracks forks into two further roller-guide tracks, in order to obtain four roller-guide tracks downstream from the said plate.

-Again in the said system, in order to guide the rollers during the switching, in the vicinity of each of the said forks, there is provided a triangular needle, with its tip facing upstream, which is hinged at an intermediate point, and is designed to oscillate between two partially stabilised positions, by means of two permanent magnets disposed on two opposite sides of each needle.

-By means of this shunting system, the various track-follower rollers of the take-up heads are guided during the return path towards, and within, the said first roller-guide track, and, when they reach the vicinity of the first fork, in relation to the position of the oscillating needle, they are guided alternately within the first or the second of the said two secondary tracks, and thus, when they reach the vicinity of the successive fork, again in relation to the position of the corresponding oscillating needle, they are guided alternately within one or the other of the respective two successive roller guide tracks disposed downstream.

-At each passage of a track-follower roller, the oscillating needle which is affected by this passage changes its position, in order to shunt the track-follower rollers, alternately in succession, into one or the other of the tracks which follow.

-Owing to its particular technical-functional structuring, this switching system has a series of disadvantages.

-A first disadvantage is caused by the fact that it is rigid and not flexible, i.e. it does not permit variations in the shunting sequence.

-A second disadvantage is caused by the fact that low operative speeds must be used, in order, for example, to prevent recoil of the deflector needle, with a consequent low production capacity of the corresponding machine.

-A further disadvantage is caused by the fact that the said system does not make it possible to check whether the shunting is correct, i.e. whether the deflector needle has assumed the required position.

-A conveyor - distributor of the type described in the preamble of claim 1 is known from US-A 4 632 238.

-According to the said patent, a particular switching system is provided, wherein, briefly, within and in the vicinity of the operative branch of the conveyor, on a longitudinal side of the latter, there is provided a longitudinal primary track, formed from a plurality of oscillating deflectors disposed consecutively, together with a plurality of deflected secondary tracks, which are inclined from upstream towards downstream, and from the said side towards the opposite side, with their upstream portion disposed laterally relative to each of the said oscillating deflectors.

-By means of this structuring, in order to deflect the track-follower rollers of the take-up mechanisms within the said secondary tracks, the said deflector elements are oscillated from their position of non-deflection, in which they are aligned consecutively in order to form a straight longitudinal track, into their inclined deflection position, in order to align the downstream portion of the said deflector elements with the upstream portion of the said secondary tracks, and thus to guide the said rollers within the said deflected secondary tracks.

-In addition, again according to this system, in order to oscillate the said deflector elements, control means are provided, which, briefly, comprise a connecting rod and an angled lever, wherein the latter, by command imparted by the electronics of the machine, by means of a pneumatic cylinder, is associated with a cam which is keyed onto a rotary longitudinal shaft.

-Owing to its particular technical-functional structuring, this switching system has a series of disadvantages.

-A first disadvantage is caused by the fact that it consists of various elements which are interconnected kinematically, and are based on couplings, thus giving rise to difficult and laborious implementation, difficult synchronisation, and rapid wear, also involving potential malfunctionings.

-A second disadvantage is caused by the fact that the said switching system is slow, it does not permit adoption of high operative speeds, and thus the corresponding devices are subject to low productivity over a period of time.

-A third disadvantage is caused by the fact that the said system is inflexible, and does not make it possible to carry out an immediate check on the correct arrangement assumed by the deflector elements, and/or concerning correct shunting of the objects transported.

- The object of the present invention is to eliminate the above described disadvantages.

- According to the invention, the problems are resolved by the characterizing features of claim 1.

- By means of the system according to the invention the following results are obtained: the switching system can easily be varied as required, and the switching mechanisms are fast, reliable, easy to control, and have low wear and low maintenance.

-The advantages which are obtained by means of the present invention consist substantially of increasing the operative speeds of the switching system, and thus the production capacities of the corresponding machines over a period of time, of being able to vary the sequence of shunting of the products quickly and easily, of obtaining reliable deflection of the take-up mechanisms, of being able to detect malfunctionings of the switch mechanisms immediately, and also of being able to provide a reliable and efficient switching system, which can be applied to diversified uses and/or applications, in relation with the results to be obtained.

### Brief description of the drawings

-Further characteristics and advantages of the present invention will become more apparent from the following description of some preferred practical embodiments, provided purely by way of non-limiting example, with reference to the attached figures, in which:
- figure 1 is a schematic perspective view of the switching system;
- figure 2 is a schematic perspective view of an enlarged detail of figure 1;
- figure 3 is a schematic plan view of the switching system with parts removed in order to make others clearer and with optional elements; and
- figure 4 is a schematic plan view, similar to figure 3, of a further embodiment.

### Description of some preferred embodiments

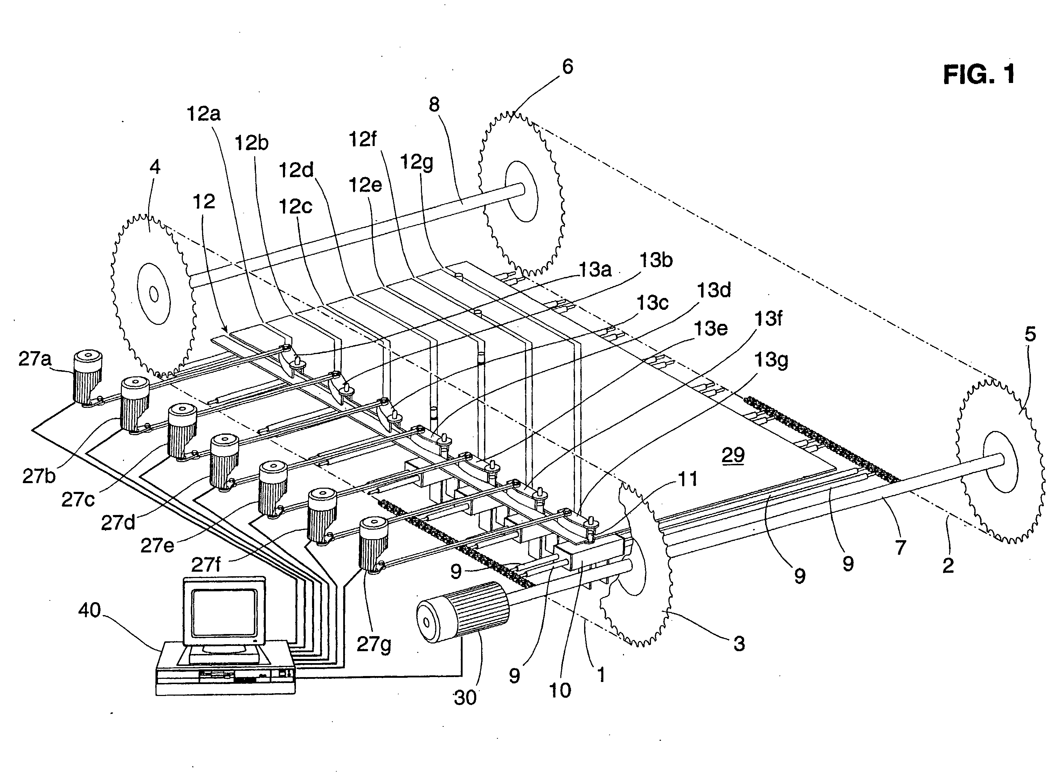

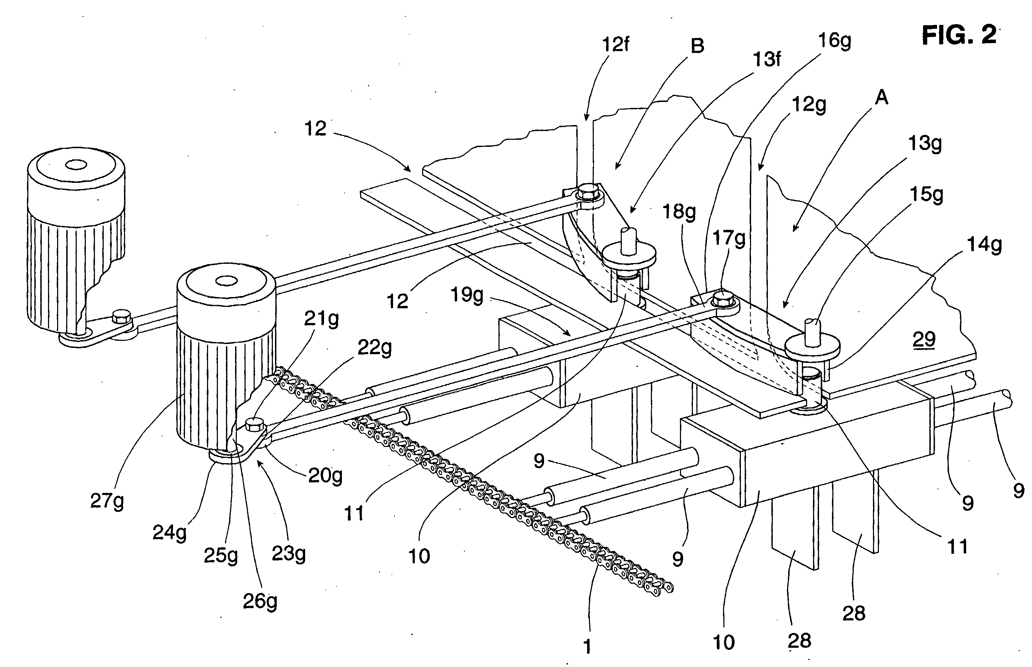

-Figures 1 and 2 illustrate a conveyor-distributor which extends longitudinally, which substantially comprises two chains 1 and 2, which are wound around respective toothed rings 3-4 and 5-6, which are keyed onto respective shafts 7 and 8, wherein the said chains 1 and 2 have secured onto them the opposite ends of a plurality of pairs of transverse suspended bars 9-9, which, in turn, support in a manner such as to slide transversely a plurality of take-up heads 10, such as the take-up heads described and illustrated in EP- B 1.061.014 , wherein each of the said take-up heads 10 has its respective grasp tines 28-28 disposed towards the exterior of an orbit described by the said take-up heads 10 during their translation, and a track-follower roller 11 disposed within the same orbit.

-At, and in the vicinity of, the lower branch of the said orbit, which in this case is considered to be the operative branch, there is disposed a notched plate-type element 29, which is located on a first level within the said orbit, which forms a first, straight primary track 12 on a first side, and a plurality of secondary tracks 12a, 12b, 12c etc., which extend in the downstream direction and towards the other side, wherein the upstream portion of the said latter tracks 12a-12g communicates with the said primary track 12 in the manner of a fork.

-On a second level, which is disposed above and in the vicinity of the said plate-type element 29, located in the vicinity of the start of each secondary track 12a-12g, i.e. in the vicinity of the said forks, there are provided a plurality of deflector elements 13a-13g, each of which has a prismatic shape which is elongate longitudinally, and a longitudinal inner channel with a transverse cross-section in the shape of a "U", wherein the said channel is designed to guide the upper free end of the rollers 11, whereas the portion which is slightly beneath the said rollers 11 is engaged by the said tracks 12, 12a-12g.

-Each of the said deflector elements 13, for example 13g in figure 2, has its upstream portion 14g pivoted at 15g on the frame of the machine, such as to align the start of the channel in the shape of a "U" vertically with the primary track 12, and has its downstream portion 16g pivoted at 17g on one end 18g of a connecting rod 19g, which has its opposite end 20g pivoted at 21 g on an end 22g of a rocker arm 23g, which has its opposite end 24g keyed at 25g onto a shaft 26g of a servomotor 27g with speed and phase control, such as a brushless motor, thus forming a kinematic mechanism in the form of an articulated quadrilateral, consisting of said drive rocker arm 23g, a connecting rod 19g, and a driven rocker arm consisting of the said deflector element 13g.

-In the upper part of the conveyor-transporter, and more particularly along the remaining non-operative upper branch of the orbit of said take-up heads, as far as the vicinity of the start of the plate-type element 29, there is disposed a guide, not illustrated here, which, from upstream towards downstream, relative to the direction of return travel of the take-up heads 10, extends from the side of the track 12g towards the side of the track 12, in order to meet all the rollers 11 during the return path, and to guide them within the upstream end of the primary track 12.

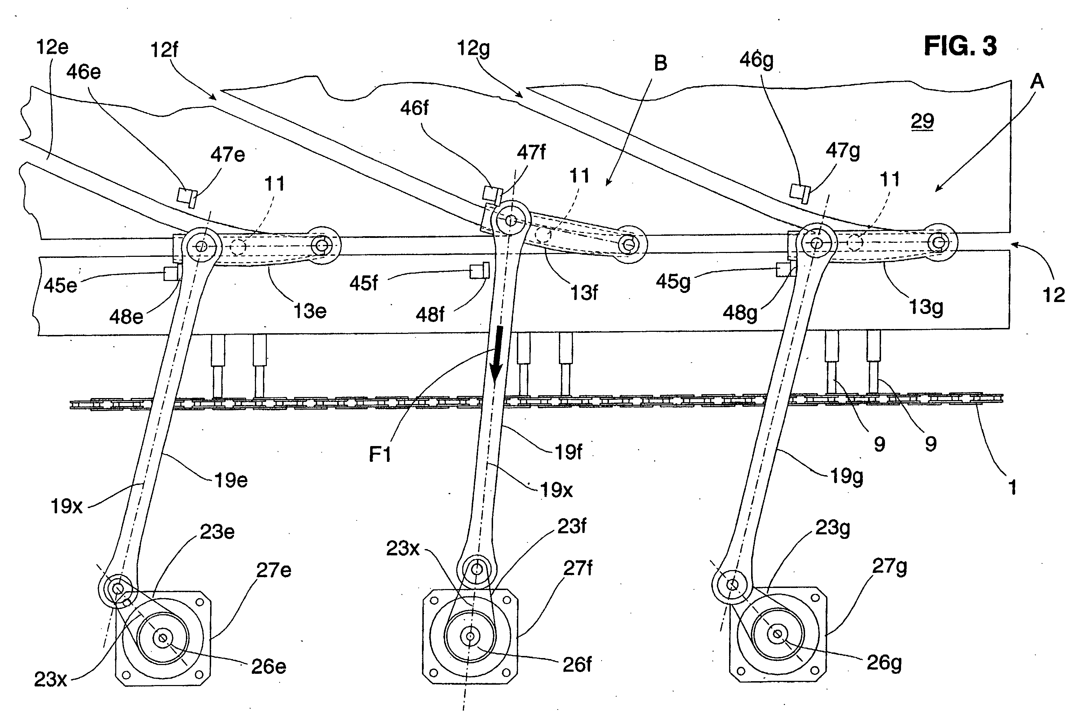

-According to this switching system, see also figure 3, by means of the servomotors 27a-27g, it is possible to oscillate the deflector elements 13a-13g in two separate positions, moving said deflector elements 13a-13g in a plane which is parallel to the plane defined by said tracks 12, 12a-12g, and, more particularly, in a first position of corrected alignment, see the configuration indicated by the arrows A in figures 2 and 3, in which the deflector element 13g has the "U"-shaped channel aligned vertically and longitudinally with the primary track 12, in order to guide the rollers 11 along the said primary track 12, or, alternatively, in a second position, of deflected alignment, see the configuration indicated by the arrows B in figures 2 and 3, in which the deflector element 13f has the "U"-shaped channel inclined in the manner of a deflector collector, with the upstream portion aligned vertically with the primary track 12, and with the downstream portion aligned vertically within the start of a secondary track 12f, in order to guide the rollers 11 which run along the primary track 12, within the said secondary track 12f.

-With reference to the second arrangement assumed by the deflector element 13f, arrows B, preferably, in this configuration, see figure 3, the first rocker arm 23f and the connecting rod 19f have their respective longitudinal axes 23x and 19x aligned ad adjacent with one another, i.e. with straight angle, such that the force of reaction F1 generated by the roller 11 meeting the downstream wall of the "U"-shaped channel does not generate torque relative to the shaft 26f, with consequent rotation or attempted rotation of the motor 27f.

-Alternatively, if required, it is also possible to use servomotors 27 which are designed to resist the rotation induced, even if the said axes 19x and 23x are not aligned, using a particular control for the said servomotors 27 (brushless) and/or more powerful motors.

-According to a first, preferred embodiment, see figure 1, the shaft 7 of the conveyor-distributor is actuated with continuous motion by means of a servomotor 30, of the type with speed and phase control, such as a brushless motor, which is controlled by means of a programmable control unit 40, which also controls the servomotors 27a, 27b, 27c etc.

-According to this particular structuring, the control unit 40 for oscillation of the deflectors 13a-13g in the first or second position, actuates the corresponding servomotors 27a-27g, and thus, in relation with the rotary position assumed by the said servomotors 27a-27g, and/or according to the particular control with which the said (brushless) servomotors are provided, it is possible to detect immediately whether each of the deflector elements 13a-13g has assumed the required arrangement, and to indicate this arrangement to the programmable control unit 40.

-In addition, again in this context, it is apparent that the change of position of the said deflector elements 13a-13g is very rapid, since it does not require pneumatic and/or mechanical controls and/or couplings, and since partial rotation of the corresponding servomotor 27a-27g is sufficient.

-Even if not particularly required, since the said servomotors 27a-27g can be stopped and locked in a pre-determined rotary position, for example by using other types of motors, see figure 3, it is possible to provide for the deflector elements 13g-13e end-of-travel stops 45g-45e for the position of non-deflection, and end-of-travel stops 46g-46e for the position of deflection, wherein, additionally, if required, it is possible to combine corresponding contact sensors 47g-47e and 48g-48e, which are also connected to the programmable control unit 40, and are designed to detect and indicate the arrangement assumed by the deflector elements 13g-13e.

-Again according to this structuring, in relation to the revolutions completed and to the rotary position of the shaft 7 and/or of the corresponding servomotor 30, the control unit 40 is informed of the linear position of the various rollers 11 of the take-up mechanisms 10, in relation to the forks of the tracks 12-12a, 12-12b, 12-12c, etc, and thus, by programming the said programmable control unit 40, it is possible to actuate the servomotors 27g-27a in phase correlation, in order to obtain any distribution of the said take-up mechanisms 10 along the tracks 12, 12a-12g, and thus of the corresponding objects transported by the latter.

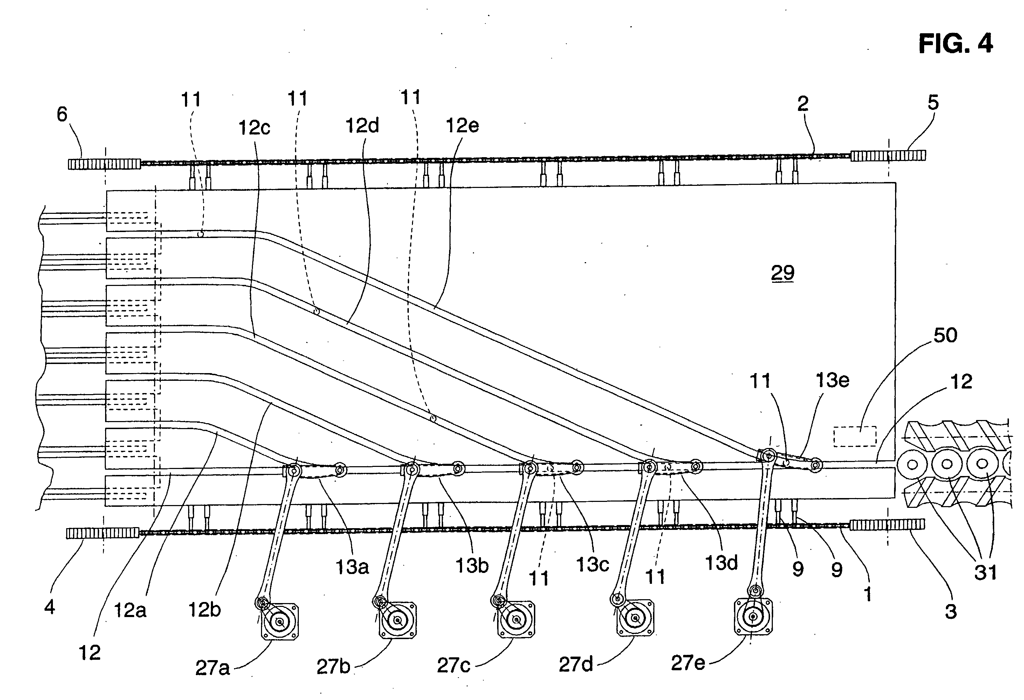

-Figure 4 illustrates a second embodiment, wherein, upstream from the conveyor-distributor, a product intactness detector, indicated as 50, which is also connected to the programmable control unit 40, is disposed symbolically.

-According to this structuring, for example, all the objects 31 which are collected upstream from the conveyor-distributor are translated in front of the product intactness detector 50, and, on the basis of the result of the sensing carried out, by actuating the servomotors 27e-27a, on completion of the change of position of the corresponding deflector elements 13e-13a, the objects 31 which are intact are shunted individually along the tracks 12e-12a, whereas, on the other hand, the objects 31 which are damaged are made to continue straight within the track 12.

-By means of this programme setting, downstream from the said conveyor, the objects 31 which are damaged will be aligned individually downstream from the track 12 in order to be removed, and, on the other hand, the objects 31 which are intact will be distributed along a plurality of tracks 12e-12a in the configuration required for packaging.

-In this context, it should also be pointed out that it is possible to designate any of the tracks 12, 12e-12a as the collection track for the objects 31 which are damaged.

## Claims

1. Switching system for a conveyor-distributor with take-up heads, which is designed to distribute in a plurality of rows products received, comprising:
- a chain conveyor (1, 2, 3, 4, 5, 6, 7, 8), which extends longitudinally and is designed to support a plurality of transverse bars (9-9), which are designed to move in a pre-determined orbit;
- a plurality of take-up heads (10), which are supported such as to be moved transversely by said transverse bars (9-9) moving in the orbit described by said chains (1, 2), wherein each take-up head (10) has grasp units (28-28) extending outside said orbit, and at least one track-follower roller (11) which extends within said orbit;
- a primary track (12) and one or a plurality of deflected secondary tracks (12a-12g), which are disposed in the vicinity of an operative branch of said orbit, located on a first level within said orbit, designed to guide the track-follower rollers (11) of the take-up heads (10) in order to dispose said take-up heads (10) in a plurality of rows which are spaced transversely;
- a plurality of deflector elements (13a-13g), which are provided with oscillating motion in a plane which is parallel to said tracks (12, 12a-12g), oriented longitudinally, disposed in the vicinity of the start of each secondary track (12a-12g), located on a second level which is spaced slightly towards the interior, compared with said pluarilty of tracks, oscillated by oscillator means, and designed to deflect the track-follower rollers (11) of the said heads (10) by command from said primary track (12) towards and within said plurality of secondary tracks (12a-12g);
- each of said oscillating deflector elements (13a-13g) being actuated by means of an articulated quadrilateral system formed by a drive rocker arm (23a-23g), a connecting rod (19a-19g) and one of said deflector elements (13a-13g), said drive rocker arm (23a-23g) having one end (24a-24g) keyed (25a-25g) onto a shaft (26a-26g) which is provided with oscillating controlled motion;
- the opposite end (22a-22g) of said rocker arm (23a-23g) being pivoted (21a-21g) on one end (20a-20g) of the connecting rod (19a-19g) the opposite end (18a-18g) of which is pivoted (17a-17g) on the downstream end (16a-16g) of said deflector element (13a-13g) which has its upstream end (14a-14g) pivoted (15a-15g) such as to align the upstream end (14a-14g) with said primary track (12),
**characterised in that** said conveyor (1, 2, 3, 4, 5, 6, 7, 8) is actuated by means of a first servomotor (30),
**in that** each of said shafts (26a-26g) is actuated by means of a respective second servomotor (27a-27g),
**in that** said first servomotor (30) and said second servomotors (27a-27g) are interconnected to one another and are controlled by means of a programmable control unit (40), and
**in that** said programmable control unit (40) actuates said second servomotors (27a-27g) in relation to the position of the take-up heads (10) along the orbit.

2. System according to claim 1, **characterized in that** said programmable control unit (40) actuates said second servomotors (27a-27g) in relation with revolutions completed and with the rotary position of the first servomotor (30) and/or of the driven shaft (7).

3. System according to claim 1 or 2, **characterized in that** when the deflector element (13a-13g) is in the deflection position, the longitudinal axis (23x) of the rocker arm (23a-23g) is aligned and adjacent with the longitudinal axis (19x) of the corresponding connecting rod (19a-19g).

4. System according to any one of the preceding claims, **characterized in that** each of said second servomotors (27a-27g) detects the arrangement assumed by said deflector elements (13a-13g) and indicates the arrangement to the programmable control unit (40) .

5. System according to any one of the preceding claims, **characterized in that** a product intactness detector (50) is disposed upstream from said conveyor-distributor, **in that** said product intactness detector (50) is connected to the programmable control unit (40), and **in that** the programmable control unit (40) disposes along a pre-determined track (12) the take-up head (10) which transports the damaged products.

6. System according to any one of the preceding claims, **characterized in that** an end-of-travel stop (45a-45g) is provided for each deflector element (13a-13g) in order to define the position of non-deflection.

7. System according to any one of the preceding claims, **characterized in that** an end-of-travel stop (46a-46g) is provided for each deflector element (13a-13g) in order to define the position of deflection.

8. System according to any one of the preceding claims, **characterized in that** a contact sensor (47a-47g) is provided for each deflector element (13a-13g) in order to detect and indicate the position of non-deflection.

9. System according to any one of the preceding claims, **characterized in that** a contact sensor (48a-48g) is provided for each deflector element (13a-13g) in order to detect and indicate the position of deflection.

## Patentansprüche

1. Weichenanordnung für einen Verteilförderer mit Greiferköpfen, die so ausgelegt ist, daß sie aufgenommene Gegenstände auf eine Mehrzahl von Reihen verteilt, umfassend:
- einen sich in Längsrichtung erstreckenden Kettenförderer (1, 2, 3, 4, 5, 6, 7, 8) für die Aufnahme mehrerer Querstangen (9-9), die sich auf einer vorbestimmten Umlaufbahn bewegen;
- eine Mehrzahl von Greiferköpfen (10), die in Querrichtung verschiebbar auf den Querstangen (9-9) gelagert sind, welche sich auf der von den Ketten (1, 2) vorgegebenen Umlaufbahn bewegen, wobei jeder Greiferkopf (10) über die Umlaufbahn nach außen vorstehende Greiforgane (28-28) sowie wenigstens eine in die Umlaufbahn sich erstreckende Nockenfolgerolle (11) hat;
- eine Hauptspur (12) und eine oder mehrere, davon abzweigende Nebenspuren (12a - 12g), die sich in der Nähe eines Arbeitsabschnitts der Umlaufbahn befinden und in einer ersten Ebene innerhalb der Umlaufbahn angeordnet und so ausgelegt sind, daß sie die Nockenfolgerollen (11) der Greiferköpfe (10) so führen, daß die Greiferköpfe (10) auf mehrere Längsreihen verteilt werden, die in Querrichtung voneinander beabstandet sind;
- eine Mehrzahl von Umlenkelementen (13a - 13g), die in einer parallel zu den Spuren (12, 12a - 12g) liegenden Ebene schwenkbeweglich, in Längsrichtung ausgerichtet und in der Nähe des Anfangs jeder Nebenspur (12a - 12g) angeordnet sind und in einer zweiten, bezüglich der Mehrzahl der Spuren geringfügig nach innen versetzten Ebene liegen und durch Schwenkmittel schwenkbeweglich angetrieben sind und auf Befehl die Nockenfolgerollen (11) der Greiferköpfe (10) aus der Hauptspur (12) in Richtung auf die Nebenspuren (12a - 12g) und in diese hinein ablenken;
- wobei jedes der schwenkbaren Umlenkelemente (13a - 13g) über ein Gelenkvierecksystem betätigt wird, das aus einem ersten Antriebs-Schwinghebel (23a - 23g), einer Koppelstange (19a - 19g) und einem der genannten Umlenkelemente (13a - 13g) besteht, wobei ein Ende (24a - 24g) des Antriebs-Schwinghebels (23a - 23g) über (25a - 25g) auf eine Welle (26a - 26g) aufgezogen ist, die die gesteuerte Schwenkbewegung ausführt;
- und wobei das gegenüberliegende Ende (22a - 22g) des Schwinghebels (23a - 23g) drehbar (21a - 21g) mit einem Ende (20a - 20g) der Koppelstange (19a - 19g) verbunden ist, deren gegenüberliegendes Ende (18a - 18g) schwenkbar (17a - 17g) mit dem in Förderrichtung hinteren Ende (16a - 16g) des Umlenkelementes (13a - 13g) verbunden ist, dessen in Förderrichtung vorderes Ende (14a - 14g) schwenkbar (15a - 15g) so gelagert ist, daß es zur Hauptspur (12) ausgerichtet ist,
**dadurch gekennzeichnet, daß** der Förderer (1, 2, 3, 4, 5, 6, 7, 8) von einem ersten Servomotor (30) angetrieben ist,
- daß jede der Wellen (26a - 26g) von einem zugehörigen zweiten Servomotor (27a - 27g) angetrieben ist,
- daß der erste Servomotor (30) und die zweiten Servomotoren (27a - 27g) über eine programmierbare Steuereinheit (40) miteinander verriegelt und von dieser gesteuert sind und
- daß die programmierbare Steuereinheit (40) die zweiten Servomotoren (27a - 27g) in Abhängigkeit von der Position der Greiferköpfe (10) entlang der Umlaufbahn betätigt.

2. Weichenanordnung nach Anspruch 1, **dadurch gekennzeichnet, daß** die programmierbare Steuereinheit (40) die zweiten Servomotoren (27a - 27g) in Abhängigkeit von den durchgeführten Drehungen und der Drehstellung des ersten Servomotores (30) und/oder der angetriebenen Welle (7) betätigt.

3. Weichenanordnung nach Anspruch 1 oder 2, dadurch gekennzeichent, daß die Längsachse (23x) des Schwinghebels (23a - 23g) zur Längsachse (19x) der zugehörigen Koppelstange (19a - 19g) ausgerichtet ist, wenn sich das Umlenkelement (13a - 13g) in der Ablenkstellung befindet.

4. Weichenanordnung nach einem der vorhergehenden Ansprüche, **dadurch gekennzeichnet, daß** jeder der zweiten Servomotoren (27a - 27g) die von den Umlenkelementen (13a - 13g) erreichte Stellung erfaßt und die Information über diese Stellung an die programmierbare Steuereinheit (40) weiterleitet.

5. Weichenanordnung nach einem der vorhergehenden Ansprüche, **dadurch gekennzeichnet, daß** am Eingangsende des Verteilförderers ein Fühler (50) zum Feststellen der einwandfreien Beschaffenheit der Gegenstände angeordnet ist, der mit der programmierbaren Steuereinheit (40) verbunden ist, und daß die Steuereinheit (40) den Greiferkopf (10), welcher beschädigte Gegenstände transportiert, auf eine vorbestimmte Spur (12) führt.

6. Weichenanordnung nach einem der vorhergehenden Ansprüche, **dadurch gekennzeichnet, daß** für jedes Umlenkelement (13a - 13g) ein Endanschlag (45a - 45g) vorgesehen ist, der die nicht umlenkende Stellung definiert.

7. Weichenanordnung nach einem der vorhergehenden Ansprüche, **dadurch gekennzeichnet, daß** für jedes Umlenkelement (13a - 13g) ein Endanschlag (46a - 46g) vorgesehen ist, der die Ablenkstellung definiert.

8. Weichenanordnung nach einem der vorhergehenden Ansprüche, **dadurch gekennzeichnet, daß** für jedes Umlenkelement (13a - 13g) ein Kontaktsensor (47a - 47g) vorgesehen ist, der die nicht umlenkende Stellung erfaßt und anzeigt.

9. Weichenanordnung nach einem der vorhergehenden Ansprüche, **dadurch gekennzeichnet, daß** für jedes Umlenkelement (13a - 13g) ein Kontaktsensor (48a - 48g) vorgesehen ist, der die Ablenkstellung erfaßt und anzeigt.

## Revendications

1. Dispositif d'aiguillage pour convoyeur de distribution à têtes de préhension, qui est conçu pour distribuer selon une pluralité de rangées les produits reçus, comprenant :
- un convoyeur à chaînes (1, 2, 3, 4, 5, 6, 7, 8), qui s'étend longitudinalement et qui est conçu pour supporter une pluralité de barres transversales (9-9), qui sont conçues pour se déplacer selon une orbite prédéterminée ;
- une pluralité de têtes de préhension (10), qui sont supportées de façon à être déplacées transversalement selon lesdites barres transversales (9-9) se déplaçant dans l'orbite décrite par lesdites chaînes (1, 2), dans lesquelles chaque tête de préhension (10) comprend des unités de préhension (28-28) s'étendant à l'extérieur de ladite orbite, et au moins un rouleau suiveur de piste (11) qui s'étend à l'intérieur de ladite orbite ;
- une piste primaire (12) et une ou plusieurs pistes secondaires (12a-12g) défléchies, qui sont disposées au voisinage d'une branche fonctionnelle de ladite orbite, placées sur un premier niveau à l'intérieur de ladite orbite, conçues pour guider les rouleaux suiveurs de pistes (11) des têtes de préhension (10) de façon à disposer lesdites têtes de préhension (10) selon une pluralité de rangées qui sont espacées tranversalement ;
- une pluralité d'éléments déflecteurs (13a-13g), qui sont prévus avec un mouvement d'oscillation dans un plan qui est parallèle auxdites pistes (12, 12a-12g), orientés longitudinalement, disposés au voisinage du début de chaque piste secondaire (12a-12g), placés sur un second niveau qui est à l'écart et légèrement plus loin vers l'intérieur, par rapport à ladite pluralité de pistes, sollicités en oscillation par des moyens oscillateurs, et conçus pour défléchir sur commande les rouleaux suiveurs de pistes (11) desdites têtes (10) depuis ladite piste primaire (12) vers et à l'intérieur de ladite pluralité de pistes secondaires (12a-12g) ;
- chacun desdits éléments déflecteurs oscillants (13a-13g) étant actionné au moyen d'un système de quadrilatère articulé formé par un bras oscillant d'entraînement (23a-23g), une tige de liaison (19a-19g) et l'un desdits éléments déflecteurs (13a-13g), ledit bras oscillant d'entraînement (23a-23g) ayant une extrémité (24a-24g) calée (25a-25g) sur un arbre (26a-26g) qui est animé d'un mouvement d'oscillation commandé ;
- l'extrémité opposée (22a-22g) dudit bras oscillant (23a-23g) étant articulée (21a-21g) à une extrémité (20a-20g) de la tige de liaison (19a-19g) dont l'extrémité opposée (18a-18g) est articulée (17a-17g) sur l'extrémité aval (16a-16g) dudit élément déflecteur (13a-13g) qui a son extrémité amont (14a-14g) articulée (15a-15g) de façon à aligner l'extrémité amont (14a-14g) avec ladite piste primaire (12),
**caractérisé en ce que** ledit convoyeur (1, 2, 3, 4, 5, 6, 7, 8) est sollicité au moyen d'un premier servomoteur (30),
**en ce que** chacun desdits arbres (26a-26g) est sollicité au moyen d'un second servomoteur (27a-27g) respectif,
**en ce que** ledit premier servomoteur (30) et lesdits seconds servomoteurs (27a-27g) sont interconnectés les uns aux autres et sont commandés au moyen d'une unité de commande programmable (40), et
**en ce que** ladite unité de commande programmable (40) sollicite lesdits seconds servomoteurs (27a-27g) en fonction de la position des têtes de préhension (10) le long de l'orbite.

2. Dispositif selon l'a revendication 1, **caractérisé en ce que** ladite unité de commande programmable (40) sollicite lesdits seconds servomoteurs (27a-27g) en fonction de révolutions achevées et en fonction de la position angulaire du premier servomoteur (30) et/ou de l'arbre moteur (7).

3. Dispositif selon la revendication 1 ou la revendication 2, **caractérisé en ce que** lorsque l'élément déflecteur (13a-13g) est dans la position de déflection, l'axe longitudinal (23x) de l'arbre oscillant (23a-23g) est aligné et adjacent avec l'axe longitudinal (19x) de la tige de connexion correspondante (19a-19g) .

4. Dispositif selon l'une quelconque des revendications précédentes, **caractérisé en ce que** chacun desdits seconds servomoteurs (27a-27g) détecte la disposition prise par lesdits éléments déflecteurs (13a-13g) et indique cette disposition à l'unité de commande programmable (40).

5. Dispositif selon l'une quelconque des revendications précédentes, **caractérisé en ce qu'**un détecteur de qualité de produit (50) est disposé en amont dudit convoyeur de distribution, **en ce que** ledit détecteur de qualité de produit (50) est connecté à l'unité de commande programmable (40), et **en ce que** l'unité de commande programmable (40) dispose le long d'une piste prédéterminée (12) la tête de préhension (10) qui transporte les produits endommagés.

6. Dispositif selon l'une quelconque des revendications précédentes, **caractérisé en ce qu'**une butée de fin de course (45a-45g) est prévue pour chaque élément déflecteur (13a-13g) de façon à définir la position de non déflection.

7. Dispositif selon l'une quelconque des revendications précédentes, **caractérisé en ce qu'**une butée de fin de course (46a-46g) est prévue pour chaque élément déflecteur (13a-13g) de façon à définir la position de déflection.

8. Dispositif selon l'une quelconque des revendications précédentes, **caractérisé en ce qu'**un capteur à contact (47a-47g) est prévu pour chaque élément déflecteur (13a-13g) de façon à détecter et à indiquer la position de non déflection.

9. Dispositif selon l'une quelconque des revendications précédentes, **caractérisé en ce qu'**un capteur à contact (48a-48g) est prévu pour chaque élément déflecteur (13a-13g) de façon à détecter et à indiquer la position de déflection.
